# EUROPÄISCHE PATENTSCHRIFT

(11) **EP 1 141 571 B1**
(45) Veröffentlichungstag und Bekanntmachung des Hinweises auf die Patenterteilung: **25.08.2004**
(21) Anmeldenummer: 99965572.3
(22) Anmeldetag: 29.12.1999
(51) Int. Cl.: F16D 57/04, B60T 1/087

(54) **HYDRODYNAMISCHER RETARDER MIT MITTELN ZUM ERZEUGEN VON DRUCKIMPULSEN**
HYDRODYNAMIC RETARDER WITH MEANS FOR GENERATING PRESSURE PULSES
RALENTISSEUR HYDRODYNAMIQUE COMPORTANT DES MOYENS POUR PRODUIRE DES IMPULSIONS DE PRESSION

(30) Priorität: 30.12.1998 DE 19860706; 30.12.1998 DE 19860707
(43) Veröffentlichungstag der Anmeldung: 10.10.2001
(73) Patentinhaber: Voith Turbo GmbH & Co. KG, 89522 Heidenheim (DE)
(72) Erfinder: ADAMS, Werner, D-74564 Crailsheim (DE); MONDORF, Karl, D-74564 Crailsheim (DE)
(74) Vertreter: Dr. Weitzel & Partner
(86) Internationale Anmeldenummer: PCT/EP1999/010445
(87) Internationale Veröffentlichungsnummer: WO 2000/040872

(56) Entgegenhaltungen:
- EP-A- 0 958 979
- US-A- 3 774 735
- US-A- 3 888 335

## Beschreibung

Die Erfindung betrifft einen hydrodynamischen Retarder gemäß dem Oberbegriff von Anspruch 1.

Hydrodynamische Retarder sind beispielsweise aus VDI Handbuch Getriebetechnik II, VDI-Richtlinien VDI 2153, Hydrodynamische Leistungsübertragung Begriffe - Bauformen - Wirkungsweisen, Kapitel 7, Bremsen oder Dubbel, Taschenbuch für den Maschinenbau, 18. Auflage, Seiten R49 bis R53 bekannt. Derartige Retarder werden, insbesondere beim Einsatz in Kraftfahrzeugen oder in Anlagen mit stark wechselndem Betrieb, durch Füllen und Entleeren des beschaufelten Arbeitskreislaufs mit einem Betriebsfluid ein- oder ausgeschaltet. Auch bei ausgeschaltetem Retarder ist noch ein Restmoment vorhanden, beispielsweise aufgrund einer umlaufenden Restölmenge und/oder zirkulierender Luft. Das durch das Restmoment bedingte Bremsmoment ist zwar sehr gering, kann sich jedoch bei hohen Drehzahlen sehr störend auswirken und zu einer unzulässig hohen Erwärmung des Retarders führen. Zur Vermeidung der Ventilationsverluste sind bereits eine Reihe von Lösungen bekannt. Dazu gehören u.a. die Verwendung von Statorbolzen sowie die Möglichkeit einer vollständigen Kreislaufevakuierung.

Wesentliche Nachteile bei der Verwendung von Statorbolzen sind darin zu sehen, daß diese aufgrund ihrer Anordnung im Profilgrund des Stators auch im Bremsbetrieb in den Arbeitskreislauf hineinreichen und diesen damit stören.

Eine weitere Möglichkeit zur Reduzierung der Leerlaufverluste besteht im Verschwenken der Statorschaufelrades gegenüber dem Rotorschaufelrad.

Möglichkeiten zur Lageänderung des Statorschaufelrades gegenüber dem Rotorschaufelrad sind bereits aus den folgenden Druckschriften bekannt:
1. DE 31 13 408 C1
2. DE 40 10 970 A1
3. DE 44 20 204 A1
4. DE 15 25 396 A1
5. DE 16 00 148 A1
6. WO 98/35170
7. WO 98/35171

Die DE 31 13 408 C1 offenbart Möglichkeiten einer Statorschaufelradverstellung eines Retarders für den Einsatz in stationären Anlagen, beispielsweise in Windkraftanlagen zur Umsetzung der Windenergie in Wärme. Die Verstellung erfolgt manuell oder mittels entsprechender Hilfsmittel, Die Feststellung des Statorschaufelrades in der ausgeschwenkten Lage erfolgt mittels mechanischer Hilfsmittel, beispielsweise in Form von Schrauben.

Der in der Druckschrift DE 40 10 970 A1 offenbarte Retarder weist analog zu der erstgenannten Druckschrift ein Statorschaufelrad auf, das in seiner Lage veränderbar ist. Jedoch erfolgt hier eine Lageveränderung durch eine zusätzlich zum Bremsmoment erzeugte Reaktionskraft, die dem Bremsmoment proportional ist.

Aus der DE 44 20 204 A1 ist ein Retarder mit einem selbsttätigen Schwenkstator bekannt geworden, der aufgrund seiner exzentrischen Lagerung im Leerlaufbetrieb selbsttätig in eine Lage gebracht wird, in der keine oder nur ein geringer Teil an Luftmassen zwischen dem Rotorschaufelrad und dem Statorschaufelrad bewegt wird.

Eine andere Möglichkeit der Minimierung von Leerlaufverlusten besteht gemäß der DE 15 25 396 A1 und der DE 16 00 148 A1 darin, mit Hilfe eines Kupplungssystems die Rotoren im Leerlauf von der Bremswelle zu lösen und im Bremsbetrieb mit der Bremswelle zu kuppeln, um so die Leerlaufleistung möglichst gering zu halten.

Nachteilig an den zuvor beschriebenen Anordnungen war, daß der Retarderarbeitsraum, der nach einer Bremsung mit Arbeitsmedium gefüllt war, bei niedrigen Drehzahlen im Nicht-Bremsbetrieb nicht vollständig bzw. nicht bis auf ein vorbestimmtes Maß entleert werden konnte.

Aufgabe der Erfindung ist es somit, eine Anordnung anzugeben, mit der unabhängig von der Retarderdrehzahl stets eine Entleerung des Retarders im Nicht-Bremsbetrieb auf einen vorbestimmten Füllgrad erreicht werden kann.

Erfindungsgemäß wird diese Aufgabe durch einen Retarder mit den Merkmalen gemäß Anspruch 1 gelöst. Die abhängigen Ansprüche beschreiben besonders vorteilhafte Weiterbildungen. Als Mittel zum gezielten Entleeren des Raumes zwischen dem zweiten Auslaß und einem nachgeordneten Auslaßventil gemäß einer Weiterbildung der Erfindung sind verschiedene Ausführungsformen denkbar, beispielsweise eine Pumpe beliebiger Bauart oder ein Raum, der während der Bremsung minimiert ist und sich nach der Bremsung vergrößert.

Besonders bevorzugt ist eine Ausführungsform, bei der als Mittel zum Entleeren Mittel zur Erzeugung von Druckimpulsen vorgesehen sind.

Mit Hilfe beispielsweise der Mittel zur Erzeugung von Druckimpulsen kann man im Auslaßkanal eine impulsartige reversible Volumenverdrängung induziieren. Ist beispielsweise mehr Arbeitsmedium im Auslaßkanal. vorhanden als gewünscht, so entsteht aufgrund von deren träger Masse ein Druckimpuls auf das Auslaßventil, welches dieses kurzzeitig öffnet und überschüssiges Arbeitsmedium ausströmen läßt. Ist kein bzw. zu wenig Arbeitsmedium im Auslaßkanal, so kann ein Teil der sich im Auslaßkanal befindlichen Luft ohne störenden Einfluß in den Arbeitsraum aufsteigen.

In einer Ausgestaltung der Erfindung ist vorgesehen, daß die Mittel zur Erzeugung von Druckimpulsen einen Druckimpulszylinder umfassen, der einen druckluftbeaufschlagten Kolben aufweist und an ein externes Druckreservoir angeschlossen sein kann.

Erfindungsgemäß ist vorgesehen, daß die Mittel zum Einstellen des optimalen Füllgrades einen Auslaß umfassen, der an einem geodätisch erhöhten Ort und/oder radial innenliegend im Auslaßraum angeordnet ist, so daß bei sich entleerendem Retarder ab einem vorbestimmten optimalen Füllungsgrad keine Arbeitsflüssigkeit mehr aus dem erweitereten Arbeitsraum, umfassend den Retarderarbeitsraum, den Außlaßraum sowie optional den Rotorrückraum abfließen kann.

In einer ersten Ausführungsform der Erfindung ist vorgesehen, daß der Auslaßkanal zur Einstellung des optimalen Füllgrades waagrecht in einer Höhe h angeordnet ist, so daß der Retarder nicht vollständig entleert wird, sondem stets auch im Nicht-Bremsbetrieb eine gewisse Menge Retarderarbeitsflüssigkeit im Retarder verbleibt.

Besonders bevorzugt ist es, wenn bei sich entleerender Bremse ab einem vorbestimmten optimalen Füllungsgrad keine Arbeitsflüssigkeit mehr ansteht und der optimale Füllgrad im Bereich von 0,01q bis 0,1 q liegt, wobei q den Gesamtfüllgrad des erweiterten Arbeitsraumes, umfassend den Retarderarbeitraum, den Auslaßraum und optional den Rotorrückraum ist.

In einer alternativen Ausführungsform zu einer waagrechten Anordnung des Auslaßkanals in einer Höhe h kann vorgesehen sein, daß der Auslaßkanal ein senkrecht in den Arbeitsraum mit der Höhe h hineinreichendes Rohr ist.

In einer fortgebildeten Ausführungsform umfaßt der Retarder hinter dem Stator einen Auslaßraum, der den Arbeitsraum erweitert.

Besonders bevorzugt ist es, wenn der waagrecht angeordnete Auslaßkanal oder das senkrecht in den Auslaßraum hineinragende Rohr in den hinter dem Stator angeordneten Auslaßraum mündet.

In einer ersten Ausführungsform der Erfindung ist vorgesehen, daß der Stator und der Rotor axial feststehend ausgebildet sind und ein vorbestimmter Arbeitsabstand ausgebildet wird.

Um die Verluste insbesondere bei hohen Leerlaufdrehzahlen zu minimieren, ist mit Vorteil vorgesehen, wenn Rotor und/oder Stator axial verschiebbar ausgebildet sind, wie beispielsweise in der WO 98/35171 gezeigt.

Die Erfindung soll nachfolgend anhand der Zeichnungen näher erläutert werden.

Es zeigen:
- Fig. 1: den Verlauf des Lambda-Wertes bzw. des Restmomentes bei Leerlaufdrehzahl in Abhängigkeit vom Füllungsgrad q des Retarderarbeitsraumes;
- Fig. 2: eine erste Ausführungsform eines Retarders mit waagrechtem Auslaß;
- Fig. 2a: eine detaillierte Ansicht einer Ausführungsform gem. Fig. 2
- Fig. 3: eine alternative Ausführungsform eines Retarders mit senkrecht in den Arbeitsraum hineinreichendem Auslaß.
- Fig. 3a: eine detaillierte Ansicht einer Ausführungsform gem. Fig.3
- Fig. 4: die erfindungsgemäße Anordnung mit der Einrichtung zum Erzeugen von Druckimpulsen.

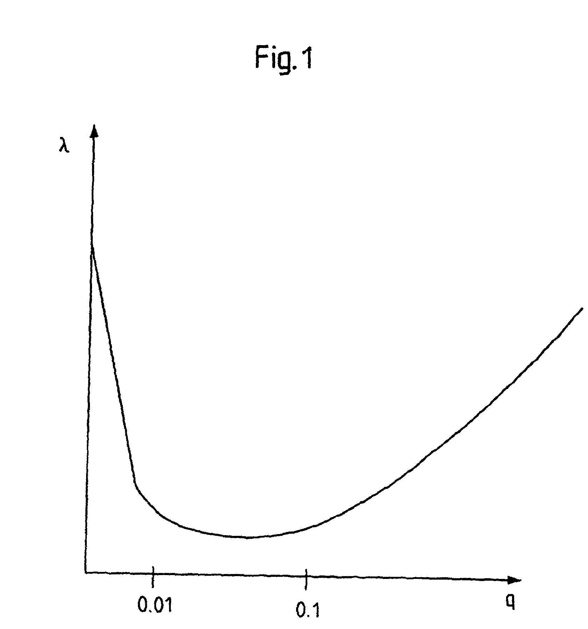

In Fig. 1 ist der Verlauf des Lambda-Wertes - der Leistungszahl Lambda -, der beispielsweise in VDI-Handbuch, Getriebetechnik 2, VDI-Richtlinien VDI 2153, Hydrodynamische Leistungsübertragung Begriffe Bauformen - Wirkungsweisen, Kapitel 7, definiert ist, der ein Maß für die Leerlaufverluste ist, gegenüber dem Füllgrad q des Retarders aufgetragen.

Wie deutlich in Figur 1 zu erkennen, besitzt der Lambda-Wert und damit die Leerlaufverluste ein deutliches Minimum im Bereich eines Gesamtfüllgrades von 0,01 q bis 0,1 q, wobei q den Gesamtfüllgrad des "erweiterten Arbeitsraumes" des Retarders bezeichnet. Die Lage des Minimums und der Verlauf der Kurve ist von der Leerlaufdrehzahl und der Form des Arbeitsraumes und des Umfeldes abhängig, in vorliegendem Ausführungsbeispiel wurde eine Leerlaufdrehzahl von 5.000 Umdrehungen/Minute angenommen. Das Minimum des Lambda-Wertes bei einem von Null verschiedenen geringen Füllungsgrad kann dadurch erklärt werden, daß aufgrund einer geringen, in einen im Nicht-Bremsbetrieb fast vollständig entleerten Retarder eingebrachten Menge an Arbeitsmedium eine Verwirbelung auftritt, hierduch eine Störung der Luftströmung verursacht wird, so daß die Leerlaufverluste minimiert werden. Ein derartiger Effekt stellt sich immer dann ein, wenn das Medium, das in die Luftströmung eingebracht wird, eine andere spezifische Masse als die in der Hauptsache im entleerten Retarder vorhandene Luft aufweist.

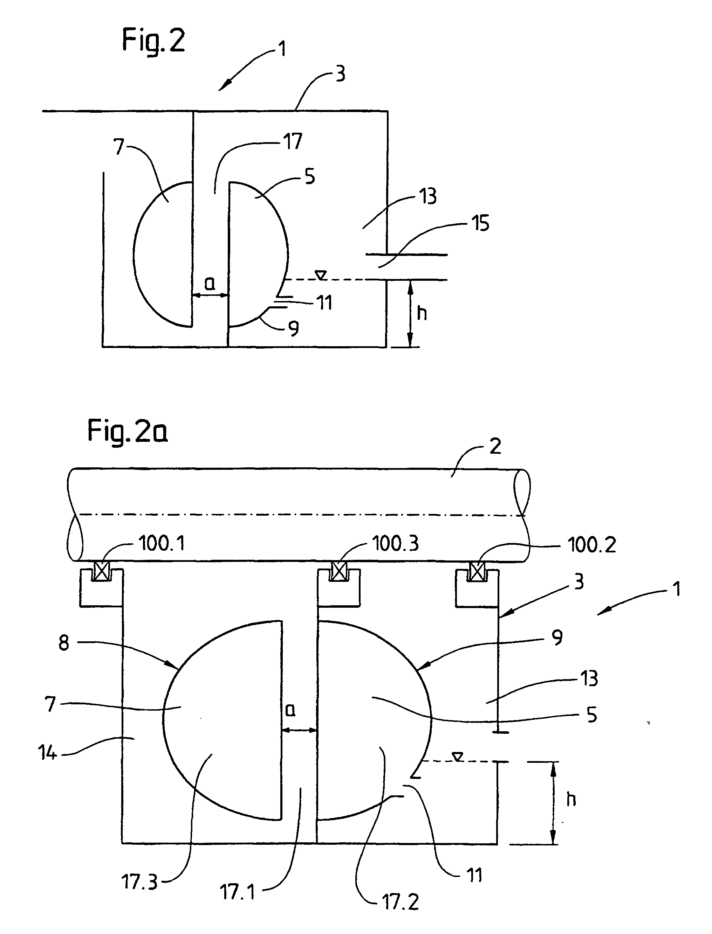

In Fig. 2 ist eine erste Ausführungsform der Erfindung schematisch im Schnitt dargestellt. Der Retarder 1 mit Retardergehäuse 3 weist einen Stator 5 sowie einen Rotor 7 auf. An der Rückwand des Statorgehäuses 9 befindet sich ein Auslaß 11, der in den hinter dem Stator angeordneten Auslaßraum 13 mündet.

In Fig. 2a ist die in Fig.2 schematisch dargestellte Ausführungsform detaillierter gezeigt. Gleiche Bauteile wie in Fig.2 werden mit denselben Bezugsziffern belegt. Wie deutliche zu erkennen, umfasste der Retarderarbeitsraum 17 den Rotorraum 17.3, den Statorraum 17.2 sowie den Zwischenraum 17.1 zwischen Rotor 7 und Stator 5. Da zumindest im Leerlaufbetrieb über den Auslaß 11 ein Austausch von Betriebsmedium und Luft zwischen dem Retarderarbeitsraum 17 und dem Auslaßraum 13 stattfindet, kann der Auslaßraum 13 auch mit zum Arbeitraum des Retarders gezählt werden. Ebenso kann ein Austausch zwischen dem Arbeitsraum 17 und dem Rotorrückraum 14 stattfinden. In einem derartigen Fall bilden Retarderarbeitsraum 17, Rotorückraum 14 sowie der Auslaßraum 13 den sogenannten "erweiterten Arbeitsraum". Deutlich zu erkennen sind in Fig.2a auch das Rotorgehäuse 8 sowie die Dichtelemente 100.1, 100.2 zwischen Retardergehäuse 3 und Welle 2 und das Dichtelement 100.3 zwischen Statorgehäuse 9 und Welle 2.

Der hinter dem Stator 5 angeordnete Auslaßraum 13 umfaßt wiederum einen Auslaß 15, der vorliegend waagrecht angeordnet ist. Der waagrecht angeordnete Auslaß 15 befindet sich in einer Höhe h. Im Gegensatz zu herkömmlichen Retardern, bei denen der Auslaß am Boden des Auslaßraumes angeordnet ist, wird auf diese Art und Weise sichergestellt, daß der Retarder auch im Nicht-Bremsbetrieb nie vollständig entleert werden kann und immer eine gewisse Restölmenge im Retarderarbeitsraum 17, das ist der Raum zwischen Rotor und Stator, umläuft. Durch entsprechende Wahl der Höhe h kann die Menge an Arbeitsmedium, das im Nicht-Bremsbetrieb im Retarderarbeitsraum zusammen mit dem gasförmigen Medium verbleibt, genau eingestellt werden. Auf diese Art und Weise ist es möglich, im Nicht-Bremsbetrieb eine vorbestimmte Füllung und damit Störung der Luftströmung einzustellen, die so geändert werden kann, daß sich bei einer vorbestimmten Drehzahl ein minimaler Lambda-Wert und damit ein Optimum in Bezug auf die Leerlaufverluste ergibt. In der in Fig. 2 und 2a dargestellten Ausführungsform weisen Stator und Rotor einen vorbestimmten Abstand d zueinander auf. Um die Leerlaufverluste noch weiter zu minimieren, kann vorgesehen sein, daß entweder der Stator oder der Rotor oder beide Bauteile axial bewegbar ausgebildet sind und der Spalt zwischen Stator und Retarder je nach Betriebsstellung des Retarders (Bremsbetrieb oder Leerlaufbetrieb) eingestellt werden kann. Im Bremsbetrieb sind Stator und Rotor nahe beieinander, d. h. mit geringem Abstand angeordnet, wohingegen sie im Nicht-Bremsbetrieb weiter voneinander entfernt sind. Diesbezüglich wird beispielsweise auf die WO 98/35171 verwiesen.

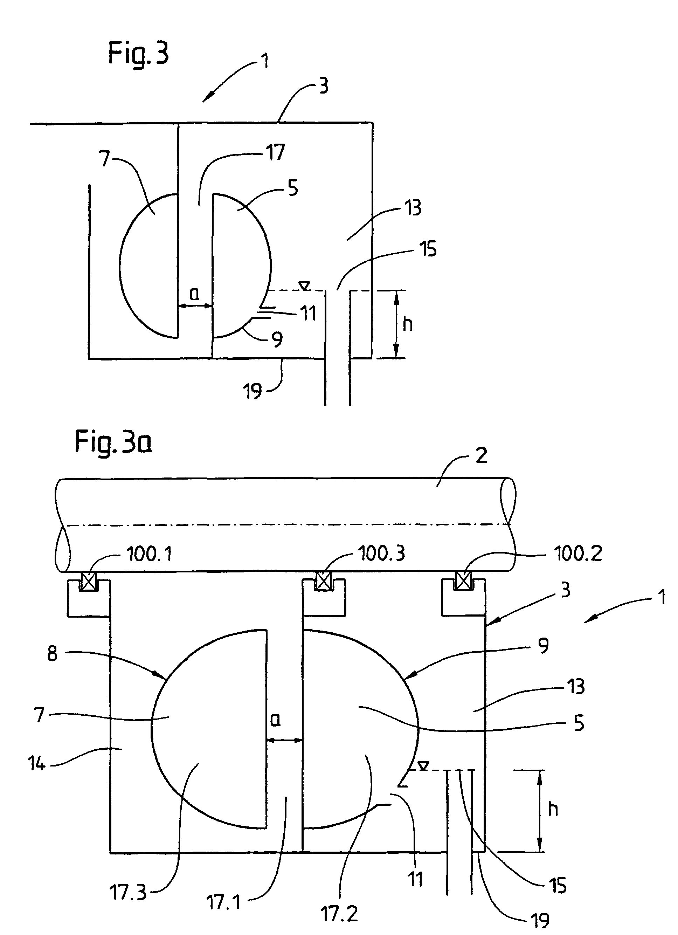

In Fig. 3 und 3a ist eine alternative Ausgestaltung der Erfindung dargestellt. Gleiche Bauteile wie in den Fig. 2 und 2a sind mit denselben Bezugsziffem belegt. Im Gegensatz zu Fig. 2 und 2a ist bei der Ausführungsform gemäß Fig. 3 sowie 3a der Auslaß 15 aus dem Auslaßraum 13 nicht waagrecht sondem senkrecht angeordnet. Um im Retarder selbst eine vorbestimmte Menge an Arbeitsflüssigkeit auch im entleerten Zustand zu halten, ist das senkrecht in den Auslaßraum mündende Auslaßrohr 15 mit seinem Einlauf in der Höhe h über dem Grund 19 des Auslaßraumes angeordnet. Auf diese Art und Weise ist es wiederum sichergestellt, daß auch im Nicht-Bremsbetrieb stets eine bestimmte Restmenge an Arbeitsmedium im Retarder verbleibt und so der vorbestimmte Füllgrad mit minimalen Leerlaufverlusten eingestellt werden kann.

Fig 3a ist eine detaillierte Ansicht der Ausführungsform gemäß Fig.3. In Fig 3a sind wiederum die Dichtelemente 100.1, 100.2, 100.3 sowie der Retarderarbeitsraum 17, der Auslaßraum 15 und der Rotorrückraum 14 ergebend den "erweiterten Gesamtarbeitsraum" dargestellt. Der Reatrderarbeitsraum 17 setzt sich aus den Räumen 17.1, 17.2 und 17.3 zusammen.

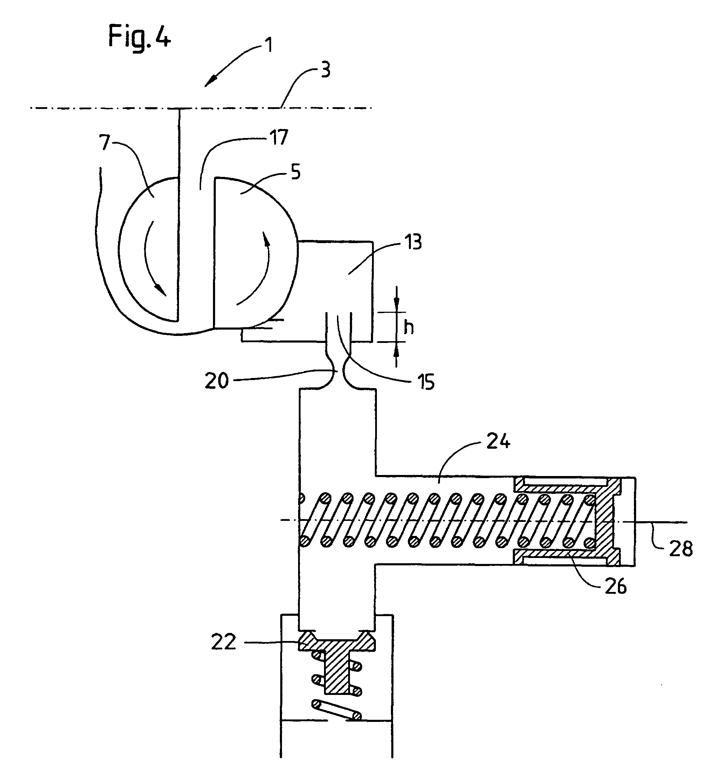

In Fig. 4 ist ein Retarder in der speziellen Ausgestaltung gemäß Fig. 3 dargestellt, bei der mittels des in den Auslaßraum 13 in der Höhe h mündende Auslaßrohr 15 dafür sorgt, daß im Leerlaufbetrieb eine bestimmte Menge an Retarderarbeitsmedium nicht unterschritten wird. Der in Fig. 4 dargestellte Retarder weist des weiteren eine erfindungsgemäße Anordnung auf, um bei niedrigen Retarderdrehzahlen einen Rückfluß von Arbeitsmedium in den Arbeitsraum zu verhindern. Die erfindungsgemäße Anordnung umfaßt den Auslaß 15 nachgeordnet eine Drossel 20 sowie ein Rückschlagventil 22.

Das Rückschlagventil 22 verhindert nicht nur einen Rückfluß von Arbeitsmedium sondern auch, daß der Wärmetauscher im Leerlaufbetrieb einem Luftdruck ausgesetzt wird, der zu einer Entleerung desselben führen würde und eine längere Einschaltzeit bei nachfolgenden Bremsungen zur Folge hätte. Neben dem Rückschlagventil 22 umfaßt die erfindungsgemäße Anordnung als Mittel zur Erzeugung von Druckimpulsen ein Druckimpulszylinder 24, der einen druckluftbeaufschlagten Kolben 26 aufweist. Bei geeigneter Lage und geeigneter Ausbildung des Druckimpulszylinders (Verhältnis Länge zu Durchmesser) kann auch auf den Kolben verzichtet werden. Der Druckimpulszylinder hat die Aufgabe, einen Volumenimpuls auf den Raum zwischen Rückschlagventil 22 und Drossel 20 zu bringen. Ist dieser so weit mit Arbeitsflüssigkeit gefüllt, daß an der Drossel 20 noch Arbeitsflüssigkeit ansteht, wird diese beim Durchströmen der Drossel einen Gegendruck erfahren, der das Rückschlagventil 22 kurzzeitig öffnet und so Arbeitsflüssigkeit entweichen läßt. Ist dieser so wenig mit Arbeitsflüssigkeit gefüllt, daß an der Drossel 20 keine Arbeitsflüssigkeit mehr ansteht, wird die anstehende Luft beim Durchströmen der Drossel einen geringen Gegendruck erfahren, der das Rückschlagventil 22 nicht öffnet und so keine weitere Arbeitsflüssigkeit entweichen läßt.

Bei Anlegen eines Druckimpulses wird somit Arbeitsmedium, vorliegend Öl, stets durch das Rückschlagventil 22 entleert. Die Betätigung des Druckimpulsventils kann mit Hilfe einer Steuerung entweder in Abhängigkeit vom im Auslaß anstehenden Ölpegels oder aber drehzahlabhängig erfolgen, wobei die Druckimpulse insbesondere bei niedrigen Drehzahlen des Retarders eingesetzt werden, da sich bei diesen der Retarderarbeitsraum durch zurücklaufendes Öl in unerwünschter Weise füllen würde.

Der zur Betätigung des Impulszylinders notwendige Luftanschluß an ein Druckluftreservoir ist durch Leitung 28 vorliegend nur angedeutet.

Mit der Erfindung wird erstmals eine Anordnung angegeben, mit der unabhängig von der Retarderdrehzahl im Nicht-Bremsbetrieb stets ein optimaler Füllungsgrad und damit ein Optimum in Bezug auf eine geringe Verlustleistung realisiert werden kann.

## Patentansprüche

1. Hydrodynamischer Retarder
mit
1.1 einem Gehäuse (1)
1.2 einem Stator (5) in einem Statorgehäuse (9)
1.3 einem Rotor (7) in einem Rotorgehäuse (8), wobei
1.4 mindestens Stator- und Rotorgehäuse einen hydrodynamischen Retarderarbeitsraum (17) ausbilden
1.5 mindestens einem ersten Auslaß (11) zum Entleeren des Retardersarbeitsraums (17) in einen Auslaßraum (13)
1.6 wobei der Retarder des weiteren Mittel zum Einstellen eines optimalen Füllungsgrades zur Verlustleistungsminimierung im Nicht-Brems-Betrieb umfaßt,
**dadurch gekennzeichnet, daß**
1.7 die Mittel zum Einstellen des optimalen Füllungsgrades einen zweiten Auslaß (15) am Auslaßraum (13) umfassen, der an einem gegenüber dem Boden des Auslaßraums (13) geodätisch erhöhten Ort und/oder radial innenliegend angeordnet ist, so daß bei sich entleerendem Retarder ab dem vorbestimmten optimalen Füllungsgrad keine Arbeitsflüssigkeit mehr ansteht.

2. Hydrodynamischer Retarder nach Anspruch 1, **dadurch gekennzeichnet, daß**
der zweite Auslaß (15) ein Auslaßkanal ist, wobei der Auslaßkanal waagrecht in einer Höhe h Oberhalb des Bodens des Auslaßraums (13) angeordnet ist.

3. Hydrodynamischer Retarder nach Anspruche 1, **dadurch gekennzeichnet, daß**
der zweite Auslaß (15) ein Auslaßkanal ist, wobei der Auslaßkanal einen senkrecht in den Auslaßraum (13) mit der Höhe h hineinreichendes Rohr umfaßt.

4. Hydrodynamischer Retarder nach einem der Ansprüche 1 bis 3,
**dadurch gekennzeichnet, daß**
der Retarder einen hinter dem Stator (5) angeordneten Auslaßraum (13) umfaßt, der den Arbeitsraum (17) erweitert.

5. Hydrodynamischer Retarder nach Anspruch 4, **dadurch gekennzeichnet, daß**
der waagrecht angeordnete Auslaßkanal oder das senkrecht in den Auslaßraum (13) hineinragende Rohr in den hinter dem Stator (5) angeordneten Auslaßraum (13) mündet.

6. Hydrodynamischer Retarder nach einem der Ansprüche 1 bis 5,
**dadurch gekennzeichnet, daß**
der Stator (5) und der Rotor (7) axial feststehend ausgebildet sind, so daß ein vorbestimmter Arbeitsabstand ausgebildet wird.

7. Hydrodynamischer Retarder nach einem der Ansprüche 1 bis 6,
**dadurch gekennzeichnet, daß**
der Stator (5) axial feststehend und der Rotor (7) axial verschiebbar ausgebildet ist.

8. Hydrodynamischer Retarder nach einem der Ansprüche 1 bis 6,
**dadurch gekennzeichnet, daß**
der Rotor (7) axial feststehend und der Stator (5) axial verschiebbar ausgebildet ist.

9. Hydrodynamischer Retarder nach einem der Ansprüche 1 bis 6,
**dadurch gekennzeichnet, daß**
sowohl Stator (5) wie Rotor (7) axial verschiebbar ausgebildet sind.

10. Hydrodynamischer Retarder nach einem der Ansprüche 1 bis 9,
weiterhin umfassend ein Auslaßventil (22), das dem zweiten Auslaß (15) nachgeordnet ist,
**dadurch gekennzeichnet, daß**
ein Druckimpulszylinder (24) zum Entleeren des Raumes zwischen dem zweiten Auslaß (15) und dem Auslaßventil (22) vorgesehen sind.

11. Retarder nach Anspruch 10 **dadurch gekennzeichnet, daß**
der Druckimpulszylinder (24) einen druckluftbeaufschlagten Kolben (26) umfaßt.

12. Hydrodynamischer Retarder nach einem der Ansprüche 10 bis 11,
**dadurch gekennzeichnet, daß**
das Auslaßventil (22) ein Rückschlagventil ist.

## Claims

1. A hydrodynamic retarder,
1.1 with a housing (1);
1.2 with a stator (5) in a stator housing (9);
1.3 with a rotor (7) in a rotor housing (8);
1.4 with the stator and rotor housing forming a hydrodynamic retarder working chamber (17);
1.5 with at least one first outlet (11) for discharging the retarder working chamber (17);
1.6 with the retarder further comprising means for setting the optimal degree of filling for minimizing the power in non-braking operation, **characterized in that**
1.7 the means for setting the optimal degree of filling comprise a second outlet (15) in the outlet chamber (13) which relative to the floor of the outlet chamber (13) is arranged at a geodetically elevated location and/or situated radially on the inside, so that in the case of an emptying retarder no working liquid will apply from the predetermined optical degree of filling.

2. A hydrodynamic retarder according to claim 1, **characterized in that** the second outlet (15) is an outlet conduit, with the outlet conduit being arranged horizontally at a height h above the floor of the outlet chamber (13).

3. A hydrodynamic retarder according to claim 1, **characterized in that** the second outlet (15) is an outlet conduit, where the outlet conduit comprises a tube reaching perpendicularly into the outlet chamber (13) with the height h.

4. A hydrodynamic retarder according to one of the claims 1 to 3, **characterized in that** the retarder comprises an outlet chamber (13) disposed behind the stator, which chamber expands the working chamber (17).

5. A hydrodynamic retarder according to claim 4, **characterized in that** the horizontally arranged outlet conduit or the tube reaching perpendicularly into the outlet chamber (13) opens into outlet chamber (13) disposed behind the stator (5).

6. A hydrodynamic retarder according to one of the claims 1 to 5, **characterized in that** the stator (5) and rotor (7) are arranged in an axially fixed way, so that a predetermined working distance is established.

7. A hydrodynamic retarder according to one of the claims 1 to 6, **characterized in that** the stator (5) is arranged in an axially fixed way and the rotor (7) in an axially displaceable way.

8. A hydrodynamic retarder according to one of the claims 1 to 6, **characterized in that** the rotor (7) is arranged in an axially fixed way and the stator (5) in an axially displaceable way.

9. A hydrodynamic retarder according to one of the claims 1 to 6, **characterized in that** both stator (5) and rotor (7) are provided with an axially displaceable configuration.

10. A hydrodynamic retarder according to one of the claims 1 to 9, further comprising a discharge valve (22) which is downstream of the outlet (15), **characterized in that** a pressure pulse cylinder (24) is provided for discharging the space between the second outlet (13) and the outlet valve (22).

11. A retarder according to claim 10, **characterized in that** the pressure pulse cylinder (24) comprises a piston (26) pressurized by compressed air.

12. A hydrodynamic retarder according to one of the claims 10 to 11, **characterized in that** the outlet valve (22) is a check valve.

## Revendications

1. Retardateur hydrodynamique avec :
1.1 un boîtier (1)
1.2 un stator (5) dans un boîtier de stator (9)
1.3 un rotor (7) dans un boîtier de rotor (8), dans lequel :
1.4 les boîtiers de stator et de rotor au moins forment un espace de travail du retardateur hydrodynamique (17)
1.5 il est prévu au moins une première sortie (11 ) pour vider l'espace de travail du retardateur (17) dans un espace de sortie (13),
1.6 le retardateur possédant en outre des moyens pour établir un niveau de remplissage optimal afin de minimiser la perte de puissance pendant le fonctionnement sans freinage,
**caractérisé en ce que** :
1.7 les moyens pour établir le niveau de remplissage optimal comprennent une deuxième sortie (15) au niveau de l'espace de sortie (13), qui est disposée à un endroit surélevé du point de vue géodésique par rapport au fond de l'espace de sortie (13) et/ou disposée à l'intérieur dans le sens radial, de telle sorte que plus aucun liquide de travail ne soit présent à partir du niveau de remplissage optimal prédéterminé lorsque le retardateur se vide.

2. Retardateur hydrodynamique selon la revendication 1, **caractérisé en ce que** la deuxième sortie (15) est un canal de sortie, lequel canal de sortie est disposé horizontalement à une hauteur h au-dessus du fond de l'espace de sortie (13).

3. Retardateur hydrodynamique selon la revendication 1, **caractérisé en ce que** la deuxième sortie (15) est un canal de sortie, lequel canal de sortie comprend un tube dépassant verticalement dans l'espace de sortie (13) sur la hauteur h.

4. Retardateur hydrodynamique selon l'une quelconque des revendications 1 à 3, **caractérisé en ce que** le retardateur comprend un espace de sortie (13) disposé derrière le stator (5), qui élargit l'espace de travail (17).

5. Retardateur hydrodynamique selon le revendication 4, **caractérisé en ce que** le canal de sortie horizontal ou le tube pénétrant verticalement dans l'espace de sortie (13) débouche dans l'espace de sortie (13) disposé derrière le stator (5).

6. Retardateur hydrodynamique selon l'une quelconque des revendications 1 à 5, **caractérisé en ce que** le stator (5) et le rotor (7) sont fixes dans le sens axial, de manière à établir une distance de travail prédéterminée.

7. Retardateur hydrodynamique selon l'une quelconque des revendications 1 à 6, **caractérisé en ce que** le stator (5) est fixe dans le sens axial et le rotor (7) est mobile dans le sens axial.

8. Retardateur hydrodynamique selon l'une quelconque des revendications 1 à 6, **caractérisé en ce que** le rotor (7) est fixe dans le sens axial et le stator (5) est mobile dans le sens axial.

9. Retardateur hydrodynamique selon l'une quelconque des revendications 1 à 6, **caractérisé en ce que** le stator (5) et le rotor (7) sont tous deux mobiles dans le sens axial.

10. Retardateur hydrodynamique selon l'une quelconque des revendications 1 à 2 comprenant en outre une soupape de sortie (22) montée en aval de la deuxième sortie (15), **caractérisé en ce qu'**il est prévu un vérin à impulsions de pression (24) destiné à vider l'espace compris entre la deuxième sortie (13) et la soupape de sortie (22).

11. Retardateur selon le revendication 10, **caractérisé en ce que** le vérin à impulsions de pression (24) possède un piston (26) soumis à une pression d'air comprimé.

12. Retardateur hydrodynamique selon l'une quelconque des revendications 10 à 11, **caractérisé en ce que** la soupape de sortie (22) est une soupape anti-retour.
